# EUROPÄISCHE PATENTSCHRIFT

(11) **EP 1 390 773 B1**
(45) Veröffentlichungstag und Bekanntmachung des Hinweises auf die Patenterteilung: **22.03.2006**
(21) Anmeldenummer: 02740499.5
(22) Anmeldetag: 24.04.2002
(51) Int. Cl.: G01T 1/11, G01T 1/02

(54) **THERMOLUMINESZENZDETEKTOR UND VERFAHREN ZU SEINER HERSTELLUNG**
THERMOLUMINESCENCE DETECTOR AND METHOD FOR PRODUCTION THEREOF
DETECTEUR THERMOLUMINESCENT ET PROCEDE POUR SA FABRICATION

(30) Priorität: 31.05.2001 DE 10126497
(43) Veröffentlichungstag der Anmeldung: 25.02.2004
(73) Patentinhaber: GSF- Forschungszentrum für Umwelt und Gesundheit, GmbH, 85764 Oberschleissheim-Neuherberg (DE)
(72) Erfinder: BRAND, Hans-Norbert, 81241 München (DE); FIGEL, Markus, 80686 München (DE)
(86) Internationale Anmeldenummer: PCT/EP2002/004496
(87) Internationale Veröffentlichungsnummer: WO 2002/099460

(56) Entgegenhaltungen:
- EP-A- 0 190 997
- DE-A- 19 643 316
- DE-A- 19 643 317

## Beschreibung

Die Erfindung betrifft einen Thermolumineszenzdetektor und ein Verfahren zu seiner Herstellung.

Aus der DE 196 43 317 A1 sind Fingerringdosimeter mit beschrifteten Thermolumineszenzdetektor (TL-Detektoren) nach der DE 196 43 316 A1 bekannt. Die auf den Detektoren (⌀3, 9x1 mm³) aufgebrachte Identifizierungsnummer im omnidirektionalen DATAMATRIX-Code muß für die Zuordnung des individuellen Kalibrierfaktors jedes einzelnen Detektors für die Dosisermittlung gelesen werden.

Bisher wurden die Detektoren in aufwendigen Verfahren mit laserbeschrifteten, hitzebeständigen Folien gekennzeichnet, wobei diese mittels Kleber mit dem Detektorkristall verbunden wurde. Hierbei ragte z. T. bei bekannten Verfahren die Folie über die Detektoroberfläche hinaus mit der Folge, dass diese Detektoren nur in speziellen Meßgeräten ausgewertet werden können. Eine rationelle Herstellung so gekennzeichneter Detektoren in großen Stückzahlen ist nur mit großem apparativen Aufwand realisierbar.

Andere Direktbeschriftungsverfahren, die Farbumschlagsreaktionen benutzen, wie sie z. B. aus der EP 0190997 A bekannt sind, können nicht angewendet werden, weil die Detektoren zum Auswerten und Löschen immer wieder ausgeheizt werden müssen und dadurch die Kennzeichnung beeinträchtigt werden oder gar verschwinden kann. Inwieweit das Meßsignal hier beeinflußt wird, ist nicht bekannt.

Entsprechende Verfahren und Einrichtungen, mit denen preiswert große Stückzahlen bei minimalem Aufwand automatisch hergestellt werden können, sind am Markt nicht erhältlich.

Es stellt sich daher die Aufgabe einen Detektor und ein Verfahren zur direkten Beschriftung des Detektors zu entwickeln, dass eine hitzebeständige dauerhafte Kennzeichnung der Detektoren erlaubt, wobei die Kennzeichnung mit einfachen Hilfsmitteln auf Standardlaserbeschriftungssystemen auch in großen Serien erfolgen kann.

Die Aufgabe wird durch die Merkmale der Patentansprüche 1 und 4 gelöst. Die Unteransprüche beschreiben vorteilhafte Ausgestaltungen der Erfindung.

Die Erfindung wird im Folgenden anhand von Ausführungsbeispielen mit Hilfe der Figuren näher erläutert.
Dabei zeigt die Fig. 1 den Ausschnitt einer Lehre zum Haltern der Detektoren. Die Fig. 2 und 3 zeigen einen Detektor in Aufsicht bzw. Seitenansicht.

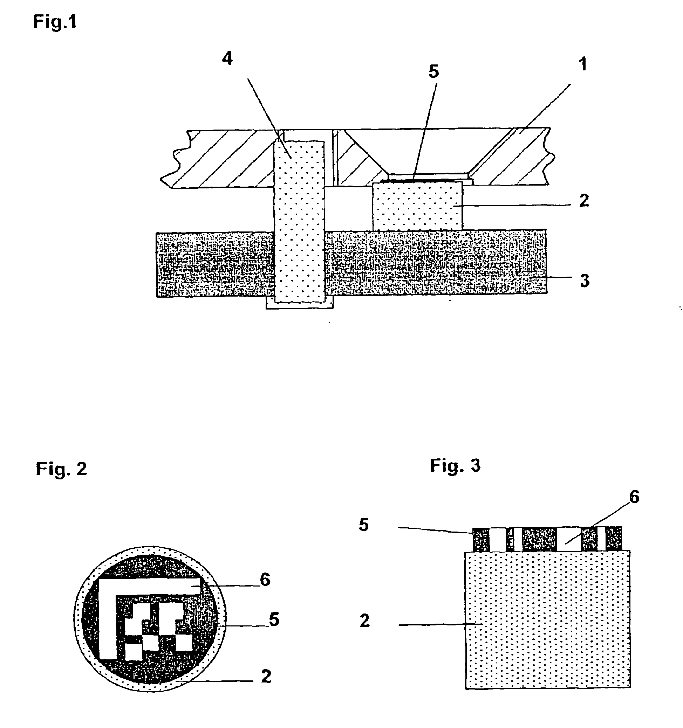

Die in Fig. 1 als Ausschnitt dargestellte Lehre besteht im wesentlichen aus einer Deckplatte 1 und einer Grundplatte 3 zwischen denen die Detektoren 2 in einer regelmäßigen zweidimensionalen Anordnung gehaltert sind. Fixiert sind die Detektoren 2 in Bohrungen mit Zentrierringen in der Deckplatte 1, wobei die beiden Platten mittels Befestigungsschrauben miteinander verbunden sind. Ein Zentrierring ist ca. 0,25 mm breit und ca. 0,25 mm hoch. Darüber befindet sich jeweils ein nach oben öffnender Trichter. Durch diesen Trichter wird eine gleichmäßige Beschichtung der Detektoroberfläche bis zum Rand erreicht. Das verwendete Material muss bis zu Temperaturen von ca. 400°C formbeständig sein.

Die Draufsicht von Fig. 2 zeigt außen einen unbeschichteten Ring, der durch die Abdeckung mit dem Zentrierring verursacht wird. Die weißen Flächen stellen die weggebrannte Silikonharzschicht 6 dar. Die schwarze Fläche stellt die aufgebrachte Silikonharzschicht dar.

Die Bedeutung der Fig. 3 als Seitenansicht ist evident.

Beim erfindungsgemäßen Verfahren wird eine Oberfläche der TL-Detektoren mit einer gut am Kristall haftenden, ca. 30-50 µm starken pigmentierten Silikonharzschicht versehe, wobei das Pigment aus im Infrarotlichtbereich stark absorbierenden, schwarzen Eisenoxid besteht und zwischen 50-60% Gewichtanteilen in der Mischung vorhanden ist. Die Teilchengröße der Pigmente liegt bei ca. 2 - 4 µm.

Als Pigmente können außerdem noch Aluminiumteilchen, Glimmer und Talcum, Zinkstaub oder Eisenglimmer verwendet werden.

Der Auftrag des pigmentierten Silikonharzes erfolgt nach bekanntem Farbspritzverfahren, wobei die Viskosität des Silikonharzes , zur Gewährleistung einer homogenen und gleichmäßigen Schichtdicke mittels geeigneter Lösungsmittel auf Spritzfähigkeit herabgesetzt wird.

Die Detektoren können für die meisten Bearbeitungsvorgänge in einer speziell angefertigten, nur die Deckfläche der Detektoren freigebenden, magazinähnlichen Lehre mit einem Fassungsvermögen von ca. 250 Detektoren untergebracht werden. Diese Lehre kann so ausgestaltet werden, dass sie auf Standardlaserbeschriftungssystemen einsetzbar ist.

Nach der Spritzbeschichtung der jeweils einer der Deckflächen der Detektoren wird das zuvor beigemischte Lösungsmittel in einem Abluft-Temperofen bei ca. 100°C in 15 min zu etwa 99% verdampft. Dabei wird eine Vorhärtung der Silikonharzschicht erreicht.

Die Kennzeichnung erfolgt mit Standardlaserbeschriftungssystemen, wobei die pigmentierte Silikonharzschicht entsprechend dem Codemuster bis zur Detektoroberfläche, ohne diese zu beschädigen, ausgebrannt wird. Dabei entsteht eine kontrastreiche Schwarzweißabbildung.

Bei Verwendung einer Lehre werden die Detektoren vor der Nachhärtung entnommen, um deren feste Verbindung zur Lehre zu verhindern und eine Beschädigung der codierten Oberfläche weitgehend auszuschließen.

Die Nachhärtung der Matrix, in der die Pigmente gelöst sind erfolgt bei einer detektormaterialabhängigen Temperatur zwischen 170°C und 400°C über etwa 30 min.

Dadurch wird eine optimale Festigkeit gegen mechanische Zerstörung erreicht.

### Bezugszeichenliste:

- 1: Deckplatte
- 2: Detektor
- 3: Grundplatte
- 4: Befestigungsschraube
- 5: Silikonharzschicht
- 6: weggebrannte Silikonharzschicht

## Patentansprüche

1. Thermolumineszenzdetektor (2) mit einer codierten Deckschicht (5), **dadurch gekennzeichnet, dass**
a) die Deckschicht aus einem Siliconharz mit darin fein verteilten Pigmentteilchen besteht, wobei die Schichtdicke zwischen 30 und 50 µm liegt und
b) die Codierung durch Verdampfen von Bereichen (6) der Deckschicht mit einem Laser nach wählbaren Mustern erzeugt wurde.

2. Thermolumineszenzdetektor nach Anspruch 1, **dadurch gekennzeichnet, dass** die Pigmentteilchen schwarze Eisenoxidteilchen mit einer Teilchengröße zwischen 2 - 4 µm sind.

3. Thermolumineszenzdetektor nach Anspruch 1 oder 2, **dadurch gekennzeichnet, dass** der Gewichtsanteil an Pigment zwischen 50 und 60 % liegt.

4. Verfahren zur Herstellung von Thermolumineszenzdetektoren (2) mit einer codierten Deckschicht (5) mit folgenden Verfahrensschritten:
a) Beschichtung von Thermolumineszenzkristallen mit pigmentiertem Siliconharz, beispielsweise durch Spritzlackierung,
b) Vorhärten der aufgebrachten Deckschicht bei ca. 100°C etwa 15 min, wobei der größte Teil des zur Spritzlackierung benötigten Lösungsmittels verdampft wird,
c) Codierung der Beschichtung durch Verdampfen von Bereichen (6) der Deckschicht mit einem Laser nach wählbaren Mustern und
d) Nachhärten der codierten Schicht bei einer Temperatur zwischen 170 - 400°C.

5. Verfahren nach Anspruch 4, **dadurch gekennzeichnet, dass** die Thermolumineszenzkristalle mit Hilfe einer Lehre in einer regelmäßigen zweidimensionalen Anordnung gehaltert sind und vor dem Nachhärten aus dieser Lehre entfernt werden

## Claims

1. Thermoluminescence detector (2) having a coded covering layer (5), **characterised in that**
a) the covering layer is produced from a silicone resin with pigment particles distributed finely therein, wherein the layer thickness is between 30 and 50 µm and
b) the coding has been generated by vaporising regions (6) of the covering layer (5) with a laser in accordance with selectable patterns.

2. Thermoluminescence detector according to claim 1, **characterised in that** the pigment particles are black iron oxide particles with a particle size between 2 and 4 µm.

3. Thermoluminescence detector according to claim 1 or 2, **characterised in that** the proportion by weight of pigment is between 50 and 60 %.

4. Method to produce thermoluminescence detectors (2) having a coded covering layer (5) with the following method steps:
a) coating thermoluminescence crystals with pigmented silicone resin, for example by means of spray painting,
b) pre-hardening the applied covering layer at about 100°C for approximately 15 minutes, wherein the largest portion of the solvent required for spray painting is vaporised,
c) coding the coating by means of vaporising regions (6) of the covering layer with a laser in accordance with selectable patterns and
d) post-hardening the coded layer at a temperature between 170 and 400°C.

5. Method according to claim 4, **characterised in that** the thermoluminescence crystals are retained in a standard two-dimensional arrangement with the assistance of a template and are removed from this template before the post-hardening operation.

## Revendications

1. Détecteur thermoluminescent (2) doté d'une couche de protection codée (5),
**caractérisé en ce que**
a) la couche de protection se compose d'une résine silicone avec des particules pigmentaires finement réparties et son épaisseur est comprise entre 30 et 50 µm, et
b) le codage est généré suivant des modèles définissables par vaporisation de zones (6) de la couche de protection à l'aide d'un laser.

2. Détecteur thermoluminescent selon la revendication 1,
**caractérisé en ce que**
les particules pigmentaires sont des particules d'oxyde de fer d'une granulométrie comprise entre 2 et 4 µm.

3. Détecteur thermoluminescent selon la revendication 1 ou 2,
**caractérisé en ce que**
la part pondérale de pigment est comprise entre 50 et 60 %.

4. Procédé de fabrication de détecteurs thermoluminescents (2) dotés d'une couche de protection codée (5) avec les étapes de procédé suivantes consistant à :
a) recouvrir de résine silicone pigmentée des cristaux thermoluminescents, par exemple par pulvérisation au pistolet,
b) durcir au préalable la couche de protection appliquée à environ 100°C pendant environ 15 min, la majeure partie du solvant utilisé pour la pulvérisation au pistolet étant vaporisée,
c) coder le revêtement suivant des modèles définissables par vaporisation des zones (6) de la couche de protection à l'aide d'un laser, et
d) durcir ultérieurement la couche codée à une température comprise entre 170 et 400°C.

5. Procédé selon la revendication 4,
**caractérisé en ce que**
les cristaux thermoluminescents sont maintenus dans un dispositif bi-dimensionnel régulier à l'aide d'une jauge et retirés de cette jauge avant le durcissement ultérieur.
